# EUROPEAN PATENT SPECIFICATION

(11) **EP 3 981 063 B1**
(45) Date of publication and mention of the grant of the patent: **31.07.2024**
(21) Application number: 20817878.0
(22) Date of filing: 19.05.2020
(51) Int. Cl.: H02M 7/483, H02M 1/32, H02M 1/36, H02H 3/02, H02H 3/087, H02H 7/26

(54) **MODIFIED HALF-BRIDGE SUBMODULE FOR MULTI-LEVEL VOLTAGE SOURCED CONVERTER WITH DC FAULT SUPPRESSION CAPABILITY**
MODIFIZIERTES HALBBRÜCKEN-SUBMODUL FÜR MEHRPEGELSPANNUNGSGESPEISTEN WANDLER MIT GLEICHSTROMFEHLERUNTERDRÜCKUNG
SOUS-MODULE DEMI-PONT MODIFIÉ POUR CONVERTISSEUR MULTI-NIVEAUX DE SOURCE DE TENSION AVEC CAPACITÉ DE SUPPRESSION DE DÉFAUT DE COURANT CONTINU

(30) Priority: 04.06.2019 US 201962856834 P
(43) Date of publication of application: 13.04.2022
(73) Proprietor: Transgrid Solutions Inc., Winnipeg, Manitoba R3T 6C2 (CA)
(72) Inventor: MOHADDES KHORASSANI, Mojtaba, Winnipeg, Manitoba R3T 6C2 (CA)
(74) Representative: Franke, Dirk
(86) International application number: PCT/CA2020/050668
(87) International publication number: WO 2020/243817

(56) References cited:
- EP-A1- 3 285 388
- EP-A1- 3 324 531
- WO-A1-2018/092303
- WO-A1-2018/163582
- WO-A1-2018/218713
- WO-A1-2018/225208
- CN-A- 105 490 258
- JP-A- 2018 190 612
- US-A1- 2012 063 181
- US-A1- 2015 055 385
- US-A1- 2015 288 284
- US-A1- 2019 044 620
- RUDRASIMHA YEDIDA AYYAPPA ET AL: "A New Hybrid Submodule for MMC with DC Fault Ride-Through Capability", 2018 IEEE INTERNATIONAL CONFERENCE ON POWER ELECTRONICS, DRIVES AND ENERGY SYSTEMS (PEDES), IEEE, 18 December 2018 (2018-12-18), pages 1 - 6, XP033545938, DOI: 10.1109/PEDES.2018.8707560
- GNANA SAMBANDAM K ET AL: "Current-fed multilevel converters: An overview of circuit topologies and modulation techniques", 2016 IEEE INDUSTRY APPLICATIONS SOCIETY ANNUAL MEETING, IEEE, 2 October 2016 (2016-10-02), pages 1 - 10, XP032993618, DOI: 10.1109/IAS.2016.7731887

## Description

### FIELD OF THE INVENTION

This invention relates to a submodule structure with the application in building Modular Multi-level Voltage Sourced Converter (MMC VSC). MMC VSCs are widely used in various applications including the High Voltage Direct Current (HVDC) or Medium Voltage Direct Current (MVDC) power transmission, reactive power compensation, DC to DC converters and in machine drives. More precisely, the invention relates to a half bridge submodule that is capable of suppressing the short circuit currents caused by DC faults.

### BACKGROUND

Voltage Source (or Sourced) Converters are widely used in various applications. A VSC can be built in multiple different topologies. A common topology is the modular multi-level converter (MMC) which comprises a number of smaller units called submodules [1].

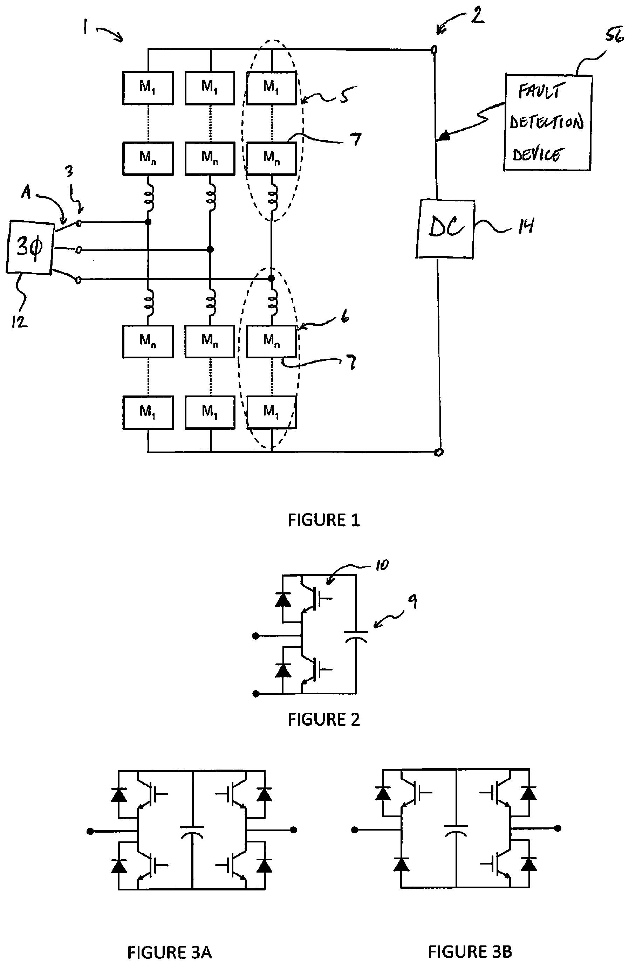

Figure 1 shows the structure of a three phase modular multi-level voltage source converter generally indicated at 1. The MMC comprises a DC port 2 formed by a pair of terminals and three terminals indicated at 3 forming three AC ports, one for each phase.

With continued reference to Figure 1, typically a MMC comprises two arms for each of its phases, typically termed an upper arm 5 and a lower arm 6 which are on either side of the terminal for a respective one of the AC phases. Each arm 5, 6 comprises a plurality of series-connected units that are commonly referred to as "submodules" and are indicated at 7. A number of possible submodule configurations are available, although today the most commonly used configurations are the Half Bridge (HB) and Full Bridge (FB) configurations. Figures 2, 3A and 3B show the circuit diagrams for the main components of HB, FB and semi-full bridge submodules, respectively. In these configurations each submodule 7 comprises an energy storage device 9 such as a capacitor and two or more electronic switches 10 to allow the capacitor to be inserted into the circuit (either in forward or reverse direction) or bypassed or blocked. Today the most commonly used electronic switches are IGBT, IEGT (injection-enhanced gate transistor), IGCT (integrated gate-commutated thyristor), BIGT (Bi-mode Insulated Gate Transistor) and diodes.

Today converters utilizing half bridge submodules are more commonly used due to the lower capital cost and lower losses compared to converters utilizing full bridge submodules. However if a short circuit occurs between the DC terminals of a converter utilizing HB submodules, the short circuit current cannot be suppressed by electronic actions. The short circuit current must be stopped either by opening a circuit breaker at the AC terminals of the converter or by an additional DC circuit breaker connected in series with one of the converter DC terminals.

The Japanese patent application No JP 2018 190612 A relates to a mechanical circuit breaker CB which is connected between the + terminal of a first DC system 1 and the + terminal of a second DC system 2. A capacitor Ca is connected between the common connection point of the + terminal of the first DC system 1 and the mechanical circuit breaker CB, and the - terminal of the first DC system 1.

In addition, the IEEE-publication "A New Hybrid Submodule for MMC with DC Fault Ride-Through Capability" describes a DC fault tolerant modular multilevel converter with submodules having the lower switch of a conventional half-bridge submodule replaced by a pair of anti-parallel thyristor switches to reduce the overall conduction losses of the converter.

### SUMMARY OF THE INVENTION

The invention is defined by the features of claim 1. The dependent claims recite advantageous embodiments of the invention.

According to an aspect of the invention there is provided a novel half bridge submodule design for a modular multilevel voltage sourced converter which is referred to herein as a modified half bridge (MHB) submodule for convenient reference. The novel design allows for blocking fault currents in the event of a short circuit between DC terminals of the voltage sourced converter without opening an AC circuit breaker of the converter and without the need for a DC circuit breaker.

This provides a relatively simple arrangement which is a simple modification of a half-bridge submodule that is capable of suppressing a short circuit current generated at DC terminals of the modular multilevel converter by electronic actions, that is, by operating switches of the converter, without circuit breakers located on either AC side or DC side of the converter.

Typically, the energy storage device is formed by a capacitor which has been charged to the substantially constant voltage value.

Typically, the first and second power electronic switches cease to conduct current generally immediately after the control signals thereto are removed.

Typically, the power conversion condition further includes a blocked state in which both the first and second pairings of electronic components are deactivated so that the power electronic switches thereof cannot conduct current.

In one arrangement, the third power electronic switch is a thyristor.

In one arrangement, there is provided a diode electrically connected in series with second power electronic switch such that the series combination of the second power electronic switch and the diode is antiparallel-connected to the third power electronic switch, and the second power electronic switch is configured to withstand up to a prescribed voltage value only of a first polarity corresponding to the current-conducting direction but not an opposite polarity thereto.

In one arrangement, in the power conversion condition, the control arrangement is configured to apply the control signal to the third power electronic switch when current is flowing into the first terminal and out of the second terminal in the bypassed state. The control signal can be provided to the third power electronic switch only when current is flowing in this direction as when it is flowing in the opposite direction the third power electronic switch is not conducting current.

Preferably, the prescribed time from the sending of the control signal to the third power electronic switch to the blocking thereof is about 1 microsecond to about 1 millisecond. This time may be dependent on how quickly the control arrangement blocks the signal to the first power electronic switch, which may be delayed or increased in order to reduce a rate of change of current in the third power electronic switch.

The submodule may be the submodule as described in this section hereinbefore.

### BRIEF DESCRIPTION OF THE DRAWINGS

The invention will now be described in conjunction with the accompanying drawings in which:
Figure 1 is a schematic diagram of a typical three-phase MMC;
Figure 2 is a schematic diagram of a conventional half bridge module for a MMC comprising IGBT and diode switches;
Figure 3A is a schematic diagram of a conventional full bridge submodule for a MMC;
Figure 3B is a schematic diagram of a conventional semi-full bridge submodule for a MMC;
Figure 4 is a schematic diagram of an arrangement of submodule according to the present invention;
Figure 5 is a schematic diagram of a variant of the arrangement of Figure 4, where some components are omitted for convenience of illustration;
Figure 6 is a schematic diagram of a variant of the arrangement of Figure 4;
Figure 7 is a schematic diagram of one specific example of the variant of Figure 4 using IGBTs;
Figure 8 is a graph showing, from top to bottom, a DC current, a lower arm current, an upper arm current and AC system currents in a VSC comprising submodules according to the present invention when a DC fault affects the same; and

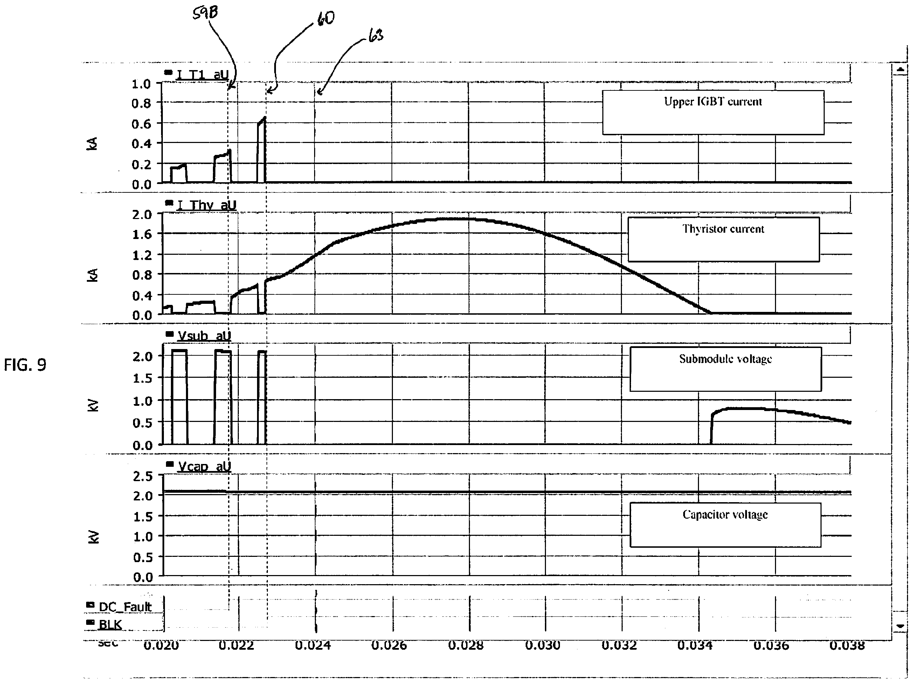

Figure 9 is a graph showing, from top to bottom, for a submodule according to the present invention that is arranged in a VSC, a current through a controllable power electronic switch for example an IGBT forming a bi-directional current conducting switch assembly connected in series with an energy storage device of the submodule, a current through a power electronic switch in the form of a thyristor forming a bi-directional current conducting switch assembly that is connected in parallel with the series-connected switch assembly and energy storage device, a submodule voltage and a voltage of a capacitor defining the energy storage device, when a DC fault affects the VSC.

In the drawings like characters of reference indicate corresponding parts in the different figures.

### DETAILED DESCRIPTION

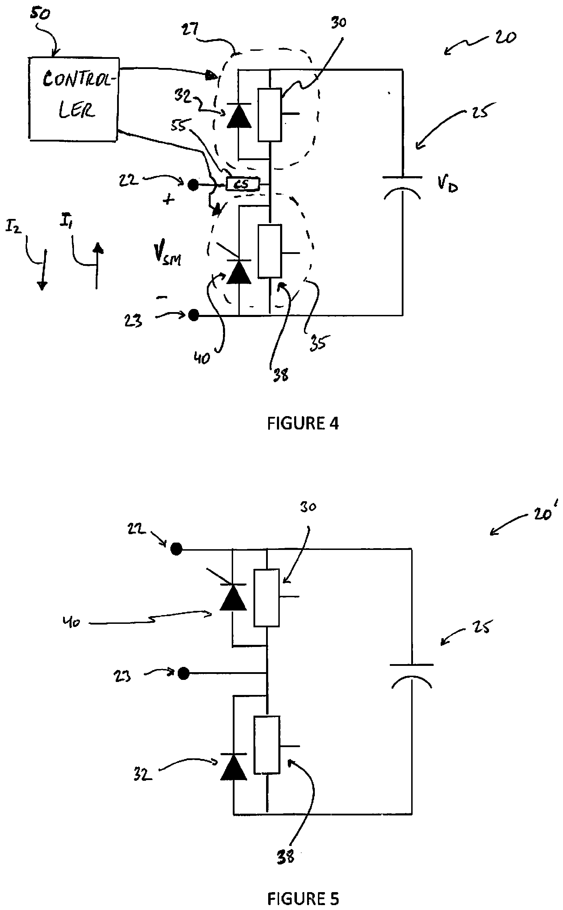

In Figures 4-7 there is shown a submodule 20 for a modular multilevel voltage sourced converter 1 such as that illustrated in Figure 1.

Referring to Figure 1, the modular multilevel voltage sourced converter 1 has at least one arm such as that indicated at 5 or 6 which electrically interconnects a phase of an AC power system 12, such as phase A, to one of two terminals of a DC power system 14. Each arm 5 or 6 includes a plurality of submodules M₁ through Mₙ which are series-connected within the respective MMC arm.

Referring now to Figure 4, the submodule 20 comprises two terminals 22, 23 for electrically connecting the submodule 20 within the modular multilevel voltage sourced converter 1 to other electronic components external to the submodule. The terminals 22, 23 collectively define a submodule voltage V_{SM}.

The submodule 20 also comprises an energy storage device 25 which is adapted to provide a substantially constant voltage value V_{D}. In the illustrated arrangement, the energy storage device is formed by a capacitor which has been charged to the substantially constant voltage value V_{D}. It is this substantially constant voltage value V_{D} which is selectively provided across the submodule terminals 22, 23 in a desired polarity, as in conventional submodules for VSCs and as will be better appreciated shortly.

In order to electrically interconnect the energy storage device 25 with the connection terminals 22, 23 of the submodule 20, the submodule includes a first bi-directional switch assembly 27 which is electrically connected in series with the energy storage device 25 to form a first branch of the submodule along which current can flow between the terminals. That is opposite ends of the first branch are connected to different ones of the two terminals 22, 23. When current flows along the first submodule branch, the submodule voltage V_{SM} is substantially equal to the substantially constant voltage value V_{D} of the energy storage device, that is, the value or magnitude of the voltage provided across the connection terminals 22, 23 is substantially equal to the voltage value of the energy storage device. A voltage drop across the first bi-directional switch assembly 27 is negligible in comparison to the magnitude of the voltage of the energy storage device 25, that is the voltage value V_{D}.

The first bi-directional switch assembly 27 comprises a first pairing of antiparallel-connected unidirectional-current conducting electronic components 30 and 32 that is configured to conduct current in two directions. Thus is enabled bidirectional current flow along the first branch of the submodule such that the energy storage device voltage V_{D} can be provided across the terminals 22, 23 regardless of the direction of the current flow along the branch.

The first bi-directional switch assembly 27 is configured to conduct current in at least one of the two directions when a control signal is applied thereto. That is, the first bi-directional switch assembly 27 is selectively conductive in at least one direction of current flow based on an independent electrical signal which is distinct from a voltage across the switch assembly 27 along the branch, or a current through the switch assembly 27.

Thus there is provided a first power electronic switch 30 of the assembly or pairing 27 which is configured to conduct current in only one direction when a control signal is applied to the switch 30. The control signal acts to toggle the switch between an activated state in which it is able conduct current and a deactivated state in which the switch is unable to conduct current or, in other words, in which the switch blocks current flow therethrough. The activated state may correspond to presence of a continuous control signal such as a voltage at a control terminal of the switch, which is often termed as the gate, and the deactivated state may correspond to absence of the control signal at the gate. The first power electronic switch 30 is configured to cease to conduct current substantially concurrently with configuration into the deactivated state as determined by the control signal. Thus, when the deactivated state corresponds to absence of the control signal, then the power electronic switch 30 acts to block current flow therethrough generally immediately after the control signal is removed.

Furthermore, as the first power electronic switch 30 is unidirectional, it is oriented to conduct current in a first direction I₁ through the submodule 20, that is generally from a first one of the terminals, which in the illustrated arrangement is that indicated at 23, towards a second one of the terminals, which in this case is that at 22.

To provide current conductivity along the first submodule branch but in an opposite direction to I₁, that is in the direction show by arrow I₂, the first bi-directional switch assembly 27 includes a second unidirectional current conducting electronic component 32 distinct from the first power electronic switch 30 that is oriented to conduct current in the second direction I₂ through the submodule, that is generally from the second terminal 22 towards the first terminal 23. In the illustrated arrangement, the unidirectional current conducting electronic component 32 is a diode so as to conduct current as long as the direction of current flow through the submodule is I₂, corresponding to the singular current conducting direction of the component 32, and the second power electronic switch 38 also oriented to conduct current in the direction I₂ is deactivated such that the current flowing in the direction I₂ must pass through the diode 32. Use of such a user-uncontrollable component over a controllable power electronic switch reduces cost of the submodule while still providing the desired functionality of bi-directional current flow along the first branch of the submodule.

In order to allow current to flow through the submodule 20 in a manner bypassing the energy storage device 25 such that the submodule 20 does not contribute to an output voltage of the MMC, that is the individual submodule voltage is zero, the submodule 20 includes a second bi-directional switch assembly 35 which is electrically connected in parallel with the first branch to form a second branch of the submodule along which current can flow between the terminals 22, 23 such that the submodule voltage V_{SM} is substantially zero. There are no other electronic components connected in series with the second bi-directional switch assembly 35 in the second branch of the submodule such that there is effectively no voltage drop across the second branch in order to provide a submodule voltage V_{SM} of zero. Similarly to the first bi-directional switch assembly, the voltage drop across the second bi-directional switch assembly is negligible overall. The second branch is parallel to the first branch with respect to the terminals 22, 23 of the submodule.

The second bi-directional switch assembly 35 comprises a second pairing of antiparallel-connected unidirectional-current conducting electronic components 38 and 40 that is configured to conduct current in two directions. In contrast to the first bi-directional switch assembly 27, the second bi-directional switch assembly 35 is configured to conduct current in each of the two directions in response to a control signal applied thereto. In other words, this switch assembly 35 is selectively conductive in each of the two opposite directions of current flow based on at least one independent electrical signal applied to the assembly 35.

As such, the second bi-directional switch assembly 35 comprises a pair of power electronic switches 38, 40 each of which is configured to conduct current in only one direction, which is opposite to the other complementary switch of the pairing, when a control signal is applied thereto. Furthermore, each of the switches 38, 40 has a separate independent control signal so as to be independently controllable of the other complementary switch in the pairing.

More specifically, the sole electronic assembly 35 in the second branch free of the energy storage device comprises the power electronic switch 38, which is subsequently referred to herein as the second power electronic switch 38, oriented to conduct current in the second direction I₂. The second power electronic switch 38 is substantially of the same type as the first power electronic switch 30 such that it also is configured to cease to conduct current substantially concurrently with configuration into the deactivated state as determined by its corresponding control signal.

In contrast to the first and second power electronic switches 30 and 38, the power electronic switch 40 of the second bi-directional assembly 35 that is complementary to the second power electronic switch 38, subsequently referred to herein as the third power electronic switch 40, is configured to cease to conduct the current in the deactivated state only once the current passing therethrough substantially falls to zero. That is, when the third power electronic switch 40 is of the type which is in the activated state for a duration for which the control signal is applied to the switch and is caused to be in the deactivated state when the control signal is removed, any current passing through the switch 40 before toggling from the activated state to the deactivated state will continue to flow through the switch until the current drops to zero. In the illustrated arrangement, the third power electronic switch 40 is a thyristor which is a conventionally available power electronic switch which provides the afore-described functionality.

It will be appreciated that the power electronic switch 40 is oriented to conduct current in the first direction I₁, which is the same as the current-conducting direction of the controllable switch 30 of the first bi-directional switch assembly 27. This allows the submodule 20 to be operated in a manner which transfers current flowing in the first direction I₁ along the first branch to the second branch free without substantially interrupting current flow through the connection terminals 22, 23 of the submodule, as will be better appreciated shortly.

It also will be appreciated that the submodule terminals 22, 23 are effectively provided across the standalone bi-directional switch assembly which is controllable in both directions of current flow such as that indicated at 35 in Figure 4. Thus, when the first and second power electronic switches 30 and 38 are of substantially the same type, the third power electronic switch 40 can be swapped with the user-uncontrollable current conducting electronic component 32, and the terminals 22, 23 provided across the antiparallel combination of the first and third power electronic switches 30, 40, as shown in Figure 5, while the submodule 20' overall substantially operates the same as that 20 shown in Figure 4.

As the novel submodule can be operated to substantially uninterruptedly transfer to the second branch the current which is conducted by the first branch, the second bi-directional switch assembly 35 is configured to withstand considerable voltages in the magnitude of the substantially constant voltage value of the energy storage device 25, so as to be able to continue to conduct the current in accordance with the assembly's 35 expected operation.

When the switch assembly 35 comprises the antiparallel power electronic switches, the third power electronic switch 40 which acts as the current transferee is configured to withstand voltage up to a prescribed voltage value of a first polarity corresponding to the current-conducting direction, which is often termed in industry as a forward voltage, and of a second opposite polarity thereto. It will be appreciated that the operation of the submodule in the inserted state as described in the previous paragraph causes a significant reverse voltage to form across the third power electronic switch 40, which corresponds to the second opposite polarity, and which the switch 40 must withstand in order to continue to operate. Furthermore when the submodule is in the blocked state after extinguishing a fault current there can be significant voltage across the power electronic switch 40 which it must withstand.

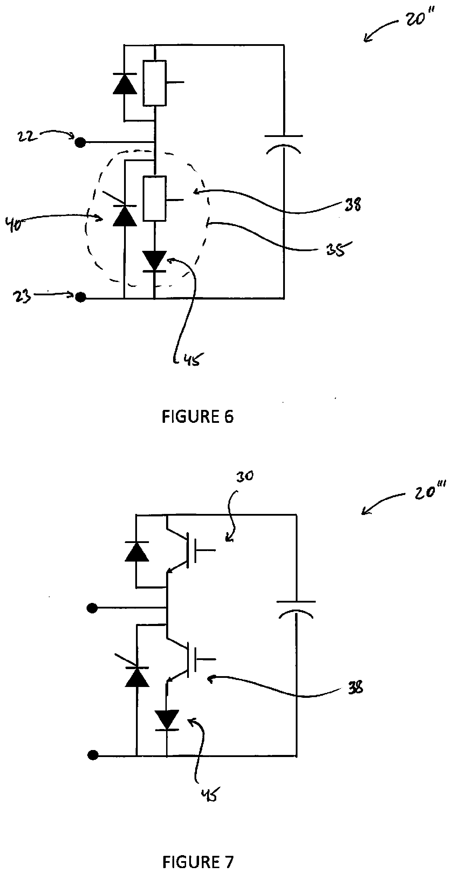

Accordingly, the oppositely-conducting portion of the second bi-directional switch assembly 35 that is complementary to the third switch 40 is also configured to withstand a significant reverse voltage with respect to its own sole current-conducting direction. In some arrangements such as that shown in Figures 4-5, the switch 38 itself is configured to withstand voltage up to a prescribed voltage value of a first polarity corresponding to the corresponding current-conducting direction and a second opposite polarity thereto, which preferably substantially correspond to the rated forward and reverse voltages of the third switch 40. In other arrangements, there is provided a diode 45 electrically connected in series with second power electronic switch 38, as shown in Figures 6-7, such that the diode 45 in series therewith is antiparallel-connected to the third power electronic switch 40, and the second power electronic switch 38 is configured to withstand up to a prescribed voltage value only of a first polarity corresponding to the current-conducting direction but not an opposite polarity thereto.

Thus Figure 6 shows a variant 20" of the arrangement of Figure 4 which includes the diode to increase the reverse voltage which the corresponding branch of the second switch assembly 35 can withstand, and Figure 7 shows one specific example 20‴ of the variant of Figure 6 in which the first and second power electronic switches 30, 38 are IGBTs which are conventionally available power electronic switches that provide the desired functionality.

Returning to Figure 4, to control operation of the submodule 20 there is provided a control arrangement which is configured for sending the control signals to the power electronic switches of the bi-directional switch assemblies 27, 35 to operate the submodule 20 to convert electrical power between AC and DC form in a substantially conventional power conversion condition. In accordance with the present invention, the control arrangement is also configured to operate the submodule in a novel DC fault suppression condition to interrupt a short circuit current which is associated with a DC fault acting on the submodule.

In order to provide the control signals, the control arrangement comprises a controller 50 which is operatively communicated with both bi-directional switch assemblies 27, 35, and more specifically the controllable selectively conductive electronic components thereof namely the first and second and third power electronic switches 30, 38 and 40, so as to provide the control signals thereto. The controller 50 may be a dedicated controller for the respective one of the submodules in the VSC which only provides the control signals therefor, or may be the controller of the VSC which provides control signals to all of the submodules thereof. Also, as will be better appreciated shortly, the control arrangement further includes a current sensor 55 with which the controller 50 is operatively communicated, and which is electrically connected in series with the submodule, for example by being in series with one of the connection terminals 22 or 23 and the parallel combination of the two submodule branches, so as to be configured to detect a direction of current flow through the submodule. That is, the current sensor 55 is configured to detect whether the current through the submodule is flowing in the first direction I₁ or in the second direction I₂. It will be appreciated that typically there is a single current sensor provided for an entire arm of a VSC which may be connected outside the terminals of any one of the constituent submodules, but nonetheless in a series configuration with the submodules of the arm. Furthermore, the controller 50 is operatively associated with a fault detection device 56 (Figure 1) which is generally considered part of the VSC. The fault detection device 56 is configured to detect a fault on a DC side of the VSC, that is at or between the DC terminals 2 of the VSC, such that the controller 50 is enabled to act in response to detection of a DC fault.

The power conversion condition of operation of the submodule 20, in which the submodule 20 contributes to flow of power between the DC system and the AC system connected to the MMC 1, comprises an inserted state in which the first bi-directional switch assembly 27 is activated to conduct current and the second bi-directional switch assembly 35 is deactivated so as not to conduct current. Thus, in the inserted state the submodule voltage V_{SM} is equal to the substantially constant voltage value V_{D} of the energy storage device 25. The power conversion condition also includes a bypassed state in which the second bi-directional switch assembly 35 is activated to conduct current and the first directional switch assembly 27 is deactivated so as not to conduct current so that the submodule voltage V_{SM} is substantially zero. Thus in either the inserted state or the bypassed state current is enabled to flow through the submodule. The power conversion condition further includes a blocked state in which both the first and second bi-directional switch assemblies 27, 35 are deactivated so that no current can be conducted through the submodule. The power conversion condition may further include a charging state in which only the third power electronic switch 40 is activated and the second power electronic switch 38 and the first bi-directional switch assembly 27 are deactivated, which is suited for when the submodule is initially energized, that is, the energy storage device 25 is being charged, prior to subsequent operation in the inserted or bypassed state or when the modular multilevel voltage sourced converter is in standby.

Since the second bi-directional switch assembly 35 comprises a controllable selectively conductive electronic component for each current direction, the control arrangement 50 is configured, in the power conversion condition, to apply the control signal corresponding to the third power electronic switch 40 only when current is flowing into the first terminal 23 and out of the second terminal 22 in the bypassed state. This is because when current is flowing in the opposite direction the third power electronic switch is not conducting the same. Thus this may simplify controls provided by the control arrangement 50.

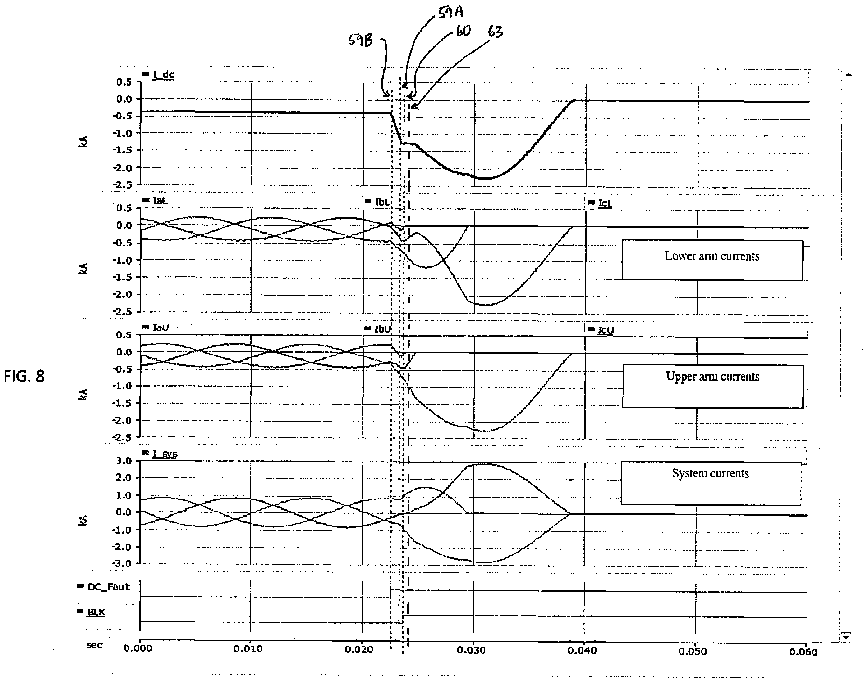

With reference to Figures 8 and 9, in order to extinguish a short circuit current stemming from a DC fault, which is assumed to flow in the direction I₁, the control arrangement 50 is configured to detect a direction of current flow through the submodule 20, for example with the current sensor 55, and to be responsive to detection 59A of the DC fault occurring at 59B to consequently operate the submodule in the DC fault suppression condition in which:
if the current conducted by the submodule 20 is flowing into the second terminal 22 and out of the first terminal 23, that is in the second direction I₂, regardless of the state of the submodule in the power conversion condition prior to the detection of the DC fault, meaning that either the user-uncontrollable current conducting component 32 or the second power electronic switch 38 is conducting current, then the control signals to the first, second and third power electronic switches 30, 38 and 40 are substantially simultaneously blocked, or, more generally speaking, the first, second and third power electronic switches are substantially simultaneously configured into the deactivated states so that current is only enabled to flow through the submodule in the direction I₂ which is opposite to the direction of the fault current flowing in I₁ such that the submodule acts to block flow of the fault current;
if the current conducted by the submodule 20 is flowing into the first terminal 23 and out of the second terminal 22, that is in the first direction I₁, and furthermore the submodule 20 was operating in the bypassed state prior to the detection of the DC fault, meaning that the current is conducted by the third power electronic switch 40, then the control signals to the first, second and third power electronic switches 30, 38 and 40 are substantially simultaneously blocked, or, more generally speaking, the first, second and third power electronic switches are substantially simultaneously configured into the deactivated states so that both bi-directional switch assemblies 27, 35 thereafter block current flow through the submodule; and
if the current conducted by the submodule 20 is flowing into the first terminal 23 and out of the second terminal 22, that is in the first direction I₁, and furthermore the submodule 20 was operating in the inserted state prior to the detection of the DC fault 59A, meaning that the current is conducted by the first power electronic switch 30:
   (i) the control signals to the first and second power electronic switches 30, 38 are substantially simultaneously blocked at 60 in Figure 9 (although the second power electronic switch 38 was already deactivated and thus remains as such) such that the first bi-directional switch assembly 27 is deactivated and the second bi-directional switch assembly 35 is partially deactivated so as not to conduct current , and, substantially simultaneously therewith, the control signal to the third power electronic switch 40 is applied such that the second bi-directional switch assembly 35 is partially activated to conduct current in the same direction as conducted by the first bi-directional switch assembly 27, allowing the current conducted by the first power electronic switch 30 prior to the detection of the DC fault to be transferred to the third power electronic switch 40 so as to continue to flow through the submodule 20 without being interrupted; and
   (ii) once a prescribed time has elapsed after sending the control signal to the third power electronic switch 40 to enable the same to carry current in the direction I₁, such that the current through the submodule 20 is flowing substantially entirely through the third power electronic switch 40 or more generally the partially-activated second bi-directional switch assembly 35, the control signal to the third power electronic switch 40 is blocked or, more generally speaking, the second bi-directional switch assembly is fully deactivated at 63 so as to thereafter block current flow once the current through the second assembly 35 drops to zero.

In regard to the first fault scenario above in which current is flowing in the second direction I₂ through the submodule irrespective of the state of power conversion condition prior to detection of the DC fault, the short circuit current can be substantially instantaneously blocked by completely deactivating the first and second bi-directional switch assemblies. This is because the diode 32, although its conductivity is not controllable, is oriented to conduct current in the opposite direction to the flow of fault current so as to act to block same. Furthermore, the second power electronic switch 38 may either cease to conduct current substantially concurrently with operation into the deactivated state or operates in a similar manner as the diode 32 as just described. Moreover, once the current flips or reverses direction from I₂ to I₁ due to the DC fault there is no possibility of conducting same through the submodule as the first and third power electronic switches which are oriented to conduct in direction I₁ are deactivated.

In regard to the second fault scenario in which current is flowing in the first direction I₁ through the submodule in the bypassed state of the power conversion condition prior to detection of the DC fault, so as be flowing through the third power electronic switch 40, the short circuit current stemming from a DC fault can be suppressed by deactivating the third power electronic switch 40 so that as soon as the current drops to zero, which is expected in accordance with conventional operation of the submodule in the respective arm of the MMC during conversion of power between AC and DC, subsequent current flow is blocked. The other power electronic switches are also deactivated so as to prevent current flow through same in the reverse direction to I₁. Furthermore, there is no risk of an overvoltage across the submodule terminals 22, 23 as prior to the DC fault the submodule voltage V_{SM} was zero.

In regard to the third fault scenario in which current is flowing in the first direction I₁ through the submodule in the inserted state of the power conversion condition prior to detection of the DC fault, so as to be flowing through the first power electronic switch 30, the short circuit current stemming from the DC fault can be suppressed by commutating the current from the first submodule branch containing the energy storage device 25 to the second submodule branch essentially consisting of the second bi-directional switch assembly 35, to prevent an overvoltage arising from the abrupt change in current through the submodule due to inductance of the circuit thereof. After a prescribed time (from 60 to 63) over which the commutation is expected to be completed, that is the current previously entirely conducted by the first branch is now carried by the second branch, the third power electronic switch 40 is deactivated so that current flow can be blocked once the current through the second branch falls to zero which is expected in accordance with conventional operation of the submodule in the respective arm of the MMC during conversion of power between AC and DC.

In the illustrated arrangement, the prescribed time from the sending of the control signal to the third power electronic switch 40 to the blocking thereof, or more generally between activating and subsequently deactivating the switch 40, between events 60 and 63, is a predetermined duration of time of about 1 microsecond to about 1 millisecond. This time may be dependent on how quickly the control arrangement 50 blocks the signal to the first power electronic switch 30, which may be delayed or increased in order to reduce a rate of change of current in the third power electronic switch 40.

This provides a relatively simple arrangement which is a simple modification of a half-bridge submodule that is capable of suppressing a short circuit current generated at DC terminals of the modular multilevel converter by electronic actions, that is, by operating switches of the converter, without circuit breakers located on either an AC side or DC side of the converter.

In use, in a MMC having at least one arm employing the novel submodule, that is a MMC in which all of the submodules are of the arrangement illustrated herein, upon detection of the DC fault, each one of the submodules of a common MMC arm is operated so as not to conduct current therethrough thus forming an open circuit for blocking a fault current generated by the DC fault.

As described hereinbefore, the new MHB submodule comprises in at least one arrangement thereof two electronic switches 30 and 38 (typically IGBT, IEGT or IGCT), a DC capacitor 25, two diodes 32 and 45 and a thyristor 40. The diode 32 is connected in parallel to the upper IGBT 30 with its anode connected to the emitter of switch 30 and its cathode to the collector of the 30. The diode 55 is connected in series with the switch 38 with its anode connected to the emitter. The thyristor 40 is connected in parallel to the series combination of switch 38 and diode 55.

In normal operation proper gate trigger signals are given to the thyristor 40, that is the third power electronic switch 40, to make it work similar to a diode, i.e. whenever the first power electronic switch 30 is turned off and the direction of the current flow in the submodule is from terminal 23 to terminal 22, the third switch 40 is turned on; otherwise no trigger signal is applied to the gate of the third switch 40.

In the event of a short circuit between the two DC converter terminals 2 the converter is operated to suppress the fault current. In this case the following actions are taken for all converter submodules in the MMC that are of the novel arrangement disclosed herein:
1. If the current direction in submodule is from terminal 22 to terminal 23:
   - Block pulses to SWITCH 30 and SWITCH 38 and at the same time block gate pulses to Switch 40;
2. If the current direction in submodule is from TERMINAL 23 to TERMINAL 22 and SWITCH 30 is OFF (Switch 40 is conducting):
   - Block pulses to SWITCH 30 and SWITCH 38 and at the same time block gate pulses to Switch 40;
3. If the current direction in submodule is from TERMINAL 23 to TERMINAL 22 and SWITCH 30 is ON:
   - Block pulses to SWITCH 30 and SWITCH 38 and turn on Switch 40 at the same time (or shortly before) to allow current commutate from SWITCH 30 to Switch 40 without interruption, and
   - Block pulses to Switch 40 shortly after the current is established in Switch 40

In case 1 prior to blocking pulses current is flowing either in diode 32 or SWITCH 38. The short circuit at the converter terminal, that is at 2, requires the submodule current direction to change, however with pulses to SWITCH 30, SWITCH 38 and Switch 40 being blocked current cannot flow from TERMINAL 23 to TERMINAL 22. Submodule current will extinguish once it reaches zero.

In case 2 current is already flowing from TERMINAL 23 to TERMINAL 22 via Switch 40. Current will grow due to the short circuit at the converter terminals. However the submodule current will go back to zero shortly after as the current commutates from one phase arm to another.

Once the current reaches zero it is extinguished and remains at zero.

In case 3 current is first transferred from SWITCH 30 to Switch 40, in other words the submodule state is changed from ON, or Inserted, to Bypass. The gate pulses to Switch 40 are blocked shortly after and therefore the current is extinguished once a zero crossing is reached. The change of submodule state is required to avoid an overvoltage at the submodule terminal. If the SWITCH 30 is turned off while current flow is from TERMINAL 23 to TERMINAL 22 through SWITCH 30 (without triggering Switch 40) a large voltage will appear at the submodule terminals due to the inductances of the circuit.

Figures 8 and 9 show the current at the converter DC terminal, converter arms, converter AC terminal and voltage and current in a sample submodule in the event of a short circuit at the DC terminals of the converter.

Turning now to Figures 4-7, the first and second power electronic switches respectively can be any electronic switch that can be turned on and off (while carrying current) via an electronic command. Examples of such devices are Insulated-Gate Bipolar Transistor (IGBT), Injection-Enhanced Gate Transistor (IEGT), Bi-mode Insulated Gate Transistor (BIGT), Integrated Gate-Commutated Thyristor (IGCT) and Metal-Oxide-Semiconductor Field-Effect Transistor (MOSFET).

A majority of the high power IGBTs cannot withstand any significant reverse voltage between their collector and emitter terminals, i.e. the emitter voltage cannot be significantly higher than the collector. The same is true for many of the other high power electronic switches too, they can withstand significant voltage between their main terminals only in one direction. In the embodiments of Figure 6 and Figure 7 diode 45 is connected in series with SWITCH 38 to provide reverse voltage withstand capability when the submodule is blocked.

In regard to Figure 4, the embodiment shown therein is related to Figures 6-7 in that:
- Diode 45 is eliminated from the circuit;
- SWITCH 38 is an electronic switch (IGBT, IGCT or similar device) that is capable of withstanding voltage between its main terminals in both polarities.

Similar to other VSC submodules both SWITCH 30 and SWITCH 38 must be capable of being turned on and off (while carrying current) electronically.

The aforementioned embodiments can be further modified in the manner shown by Figure 5, that is by:
- Moving the submodule terminals TERMINAL 22 and TERMINAL 23 to the two ends of SWITCH 30
- Connecting thyristor Switch 40 in parallel to SWITCH 30 and diode 32 in parallel to SWITCH 38.

As described hereinbefore the present invention relates to a voltage sourced converter submodule comprising a capacitor C, two power electronic switches SWITCH 30 and SWITCH 38 (such as IGBT), two diodes 32 and 45 and a thyristor Switch 40 connected as shown in Figure 4.

As described hereinbefore the present invention also relates to a voltage sourced converter submodule which is similar to that of the previous paragraph but in which the IGBTs are replaced by any other power electronic devices that can be switched ON and OFF while carrying current. Examples of such devices are IGCT, BGIT, IEGT and MOSFET.

As described hereinbefore the present invention also relates to a voltage sourced converter submodule which is similar to that of the previous paragraph but in which SWITCH 38 or both SWITCH 30 and SWITCH 38 replaced by a power electronic switch that is capable of withstanding comparable voltages in both polarities.

As described hereinbefore the present invention also relates to a voltage sourced converter submodule which is similar to that of any one of the previous three paragraphs but in which thyristor Switch 40 connected in parallel to the power electronic switch SWITCH 30 and the diode 32 connected parallel to the power electronic switch SWITCH 38 and the submodule terminals are connected across the parallel combination of the switches 30 and 40.

The scope of the claims should not be limited by the preferred embodiments set forth in the examples but should be given the broadest interpretation consistent with the specification as a whole.

### REFERENCES

A. Lesnicar and R. Marquardt, "An innovative modular multilevel converter topology suitable for a wide power range," 2003 IEEE Bologna Power Tech Conference Proceedings, 2003, pp. 6 pp. Vol.3.

## Claims

1. A submodule (20) for a modular multilevel voltage sourced converter comprising:
two terminals (22, 23) for electrically connecting the submodule (20) within the modular multilevel voltage sourced converter and defining a submodule voltage (VSM);
an energy storage device (25) adapted to provide a substantially constant voltage value; a first pairing of antiparallel-connected unidirectional-current conducting electronic components (27) electrically connected in series with the energy storage device (25) to form a first one of two branches of the submodule (20) which is electrically connected between the terminals (22, 23) and along which current can flow between the terminals (22, 23) such that the submodule voltage (VSM) is substantially equal to the substantially constant voltage value of the energy storage device (25);
the first pairing of electronic components (27) including a first power electronic switch (30) which is configured to conduct current when a control signal is applied thereto, the first power electronic switch (30) being oriented to conduct current in a first direction (I₁) from a first one of the terminals (23) towards a second one of the terminals (22);
a second pairing of antiparallel-connected unidirectional-current conducting electronic components (35) electrically connected between the terminals (22, 23) in parallel with the first branch with respect to the terminals (22, 23) so as to form a second one of the two branches of the submodule (20) along which current can flow between the terminals (22, 23) such that the submodule voltage (VSM) is substantially zero;
the second pairing of electronic components (35) including a second power electronic switch (38) which is configured to conduct current when a control signal is applied thereto, the second power electronic switch (38) being oriented to conduct current in a second direction (I₂) from the second terminal (22) towards the first terminal (23), so as to be opposite to the first direction (I₁);
a control arrangement (50) configured for sending the control signals to the power electronic switches (30, 38) to operate the submodule (20) in a power conversion condition having an inserted state in which the first pairing of electronic components (27) is activated to conduct the current so that the submodule voltage (VSM) is equal to the substantially constant voltage value of the energy storage device (25) and a bypassed state in which the second pairing of electronic components (35) is activated to conduct the current so that the submodule voltage (VSM) is substantially zero;
wherein the submodule (20) is **characterized in that**:
the second pairing of electronic components (35) includes a third power electronic switch which is configured to conduct current when a control signal is applied thereto and to cease to conduct the current in an absence of said control signal once the current passing through the third electronic switch substantially falls to zero after said control signal has been removed, the third power electronic switch being oriented to conduct current in the first direction (I₁) from the first terminal (23) towards the second terminal (22) and being configured to withstand voltage up to a prescribed voltage value of a first polarity corresponding to the current-conducting direction and a second opposite polarity thereto; and, in order to suppress a short circuit current stemming from a DC fault and directed in the first direction (I1),
the control arrangement (50) is configured to detect a direction of current flow through the submodule (20) and to be responsive to detection of the DC fault to operate the submodule (20) in a DC fault suppression condition in which:
if the current conducted by the submodule (20) is flowing in the second direction (I2) into the second terminal (22) and out of the first terminal (23),
the control arrangement is configured to substantially simultaneously block the control signals to the first, second and third power electronic switches (30, 38, 40);
if the current conducted by the submodule (20) is flowing in the first direction (I1) into the first terminal (23) and out of the second terminal (22) and the submodule (20) was operating in the bypassed state prior to the detection of the DC fault, the control arrangement is configured to substantially simultaneously block the control signals to the first, second and third power electronic switches (30, 38, 40); and
if the current conducted by the submodule (20) is flowing into the first terminal (23) and out of the second terminal (22) and the submodule (20) was operating in the inserted state prior to the detection of the DC fault, (i) the control arrangement is configured to substantially simultaneously block the control signals to the first and second power electronic switches (30, 38) and, substantially simultaneously therewith, apply the control signal to the third power electronic switch (40) such that the current conducted by the first power electronic switch (30) prior to the detection of the DC fault can be transferred to the third power electronic switch (40) so as to continue to flow through the submodule (20) without being interrupted; and (ii) once a prescribed time has elapsed after sending the control signal to the third power electronic switch (40) such that the current through the submodule (20) is flowing through the third power electronic switch (40), the control arrangement is configured to block the control signal to the third power electronic switch (40).

2. The submodule (20) of claim 1 wherein the third power electronic switch (40) is a thyristor.

3. The submodule (20) of claim 1 or 2 wherein there is provided a diode (45) electrically connected in series with second power electronic switch (38) such that the diode (45) in series therewith is antiparallel-connected to the third power electronic switch (40), and the second power electronic switch (38) is configured to withstand up to a prescribed voltage value only of a first polarity corresponding to the current-conducting direction but not an opposite polarity thereto.

4. The submodule (20) of any one of claims 1 to 3 wherein, in the power conversion condition, the control arrangement (50) is configured to apply the control signal to the third power electronic switch (40) when current is flowing into the first terminal (23) and out of the second terminal (22) in the bypassed state.

5. The submodule (20) of any one of claims 1 to 4 wherein the prescribed time from the sending of the control signal to the third power electronic switch (40) to the blocking thereof is about 1 microsecond to about 1 millisecond.

## Patentansprüche

1. Ein Submodul (20) für einen modularen mehrstufigen Spannungsquellenumrichter, umfassend:
zwei Anschlüsse (22, 23) zum elektrischen Verbinden des Submoduls (20) innerhalb des modularen mehrstufigen Spannungsquellenumrichters und Definieren einer Submodulspannung (VSM);
ein Energiespeichergerät (25), das dazu geeignet ist, einen im Wesentlichen konstanten Spannungswert bereitzustellen; eine erste Paarung antiparallel geschalteter, unidirektionalen Strom leitender elektronischer Komponenten (27), die elektrisch in Reihe mit dem Energiespeichergerät (25) geschaltet sind, um einen ersten von zwei Zweigen des Submoduls (20) zu bilden, der elektrisch zwischen den Anschlüssen (22, 23) angeschlossen ist und entlang dem Strom zwischen den Anschlüssen (22, 23) fließen kann, so dass die Submodulspannung (VSM) im Wesentlichen gleich dem im Wesentlichen konstanten Spannungswert des Energiespeichergeräts (25) ist;
wobei die erste Paarung elektronischer Komponenten (27) einen ersten elektronischen Leistungsschalter (30) umfasst, der so konfiguriert ist, dass er Strom leitet, wenn ein Steuersignal daran angelegt wird, wobei der erste elektronische Leistungsschalter (30) so ausgerichtet ist, dass er Strom in eine erste Richtung (I₁) leitet, von einem ersten der Anschlüsse (23) zu einem zweiten der Anschlüsse (22);
eine zweite Paarung antiparallel verbundener, unidirektionalen Strom leitender elektronischer Komponenten (35), die elektrisch zwischen den Anschlüssen (22, 23) parallel zum ersten Zweig in Bezug auf die Anschlüsse (22, 23) verbunden sind, um einen zweiten von zwei Zweigen des Submoduls (20) zu bilden, entlang dem Strom zwischen den Anschlüssen (22, 23) fließen kann, so dass die Submodulspannung (VSM) im Wesentlichen Null beträgt;
wobei die zweite Paarung elektronischer Komponenten (35) einen zweiten elektronischen Leistungsschalter (38) umfasst, der dazu konfiguriert ist, Strom zu leiten, wenn ein Steuersignal daran angelegt wird, wobei der zweite elektronische Leistungsschalter (38) dazu ausgerichtet ist, Strom in eine zweite Richtung (I₂), vom zweiten Anschluss (22) zum ersten Anschluss (23) zu leiten, und zwar entgegengesetzt zur ersten Richtung (I₁);
eine Steueranordnung (50), die zum Senden der Steuersignale an die Leistungselektronikschalter (30, 38) konfiguriert ist, um das Submodul (20) in einem Leistungsumwandlungszustand zu betreiben, der einen eingesetzten Zustand aufweist, in dem die erste Paarung elektronischer Komponenten (27) aktiviert ist, um den Strom zu leiten, so dass die Submodulspannung (VSM) gleich dem im Wesentlichen konstanten Spannungswert des Energiespeichergeräts (25) ist, und einen umgangenen Zustand, in dem die zweite Paarung elektronischer Komponenten (35) aktiviert ist, um den Strom zu leiten, so dass die Submodulspannung (VSM) im Wesentlichen Null ist;
wobei das Submodul (20) **dadurch gekennzeichnet ist, dass**
die zweite Paarung elektronischer Komponenten (35) einen dritten elektronischen Leistungsschalter umfasst, der so konfiguriert ist, dass er Strom leitet, wenn ein Steuersignal an ihn angelegt wird, und die Stromleitung bei Abwesenheit des Steuersignals einstellt, sobald der durch den dritten elektronischen Schalter fließende Strom im Wesentlichen auf Null fällt, nachdem das Steuersignal entfernt wurde, wobei der dritte elektronische Leistungsschalter so ausgerichtet ist, dass er Strom in der ersten Richtung (I₁) ersten Anschluss (23) zum zweiten Anschluss (22) leitet, und so konfiguriert ist, dass er Spannungen bis zu einem vorgeschriebenen Spannungswert einer ersten Polarität, die der Stromleitungsrichtung entspricht, und einer zweiten, entgegengesetzten Polarität standhält; und, um einen Kurzschlussstrom aus einem Gleichstromfehler zu unterdrücken und gerichtet in die erste Richtung (I₁), die Steueranordnung (50) dazu konfiguriert ist, eine Stromflussrichtung durch das Submodul (20) zu erkennen und auf die Erkennung eines Gleichstromfehlers zu reagieren, um das Submodul (20) in einem Gleichstromfehlerunterdrückungszustand zu betreiben, wobei,
wenn der vom Submodul (20) geleitete Strom in der zweiten Richtung (I₂) in den zweiten Anschluss (22) hinein und aus dem ersten Anschluss (23) heraus fließt, die Steueranordnung konfiguriert ist, die Steuersignale an den ersten, zweiten und dritten leistungselektronischen Schaltern (30, 38, 40) im Wesentlichen gleichzeitig zu blockieren;
wenn der vom Submodul (20) geleitete Strom in der ersten Richtung (I₁) in den ersten Anschluss (23) hinein und aus dem zweiten Anschluss (22) heraus fließt und das Submodul (20) vor der Erkennung des Gleichstromfehlers im überbrückten Zustand betrieben wurde, die Steueranordnung konfiguriert ist, die Steuersignale an den ersten, zweiten und dritten leistungselektronischen Schaltern (30, 38, 40) im Wesentlichen gleichzeitig zu blockieren; und
wenn der vom Submodul (20) geleitete Strom in den ersten Anschluss (23) hinein und aus dem zweiten Anschluss (22) heraus fließt und das Submodul (20) vor der Erkennung des Gleichstromfehlers im eingesteckten Zustand betrieben wurde, (i) werden die Steuersignale an den ersten und zweiten leistungselektronischen Schalter (30, 38) im Wesentlichen gleichzeitig blockiert und im Wesentlichen gleichzeitig damit wird das Steuersignal an den dritten leistungselektronischen Schalter (40) angelegt, so dass der vom ersten leistungselektronischen Schalter (30) vor der Erkennung des Gleichstromfehlers geleitete Strom an den dritten leistungselektronischen Schalter (40) übertragen werden kann, um so weiterhin ohne Unterbrechung durch das Submodul (20) zu fließen; und (ii) sobald eine vorgeschriebene Zeit nach dem Senden des Steuersignals an den dritten leistungselektronischen Schalter (40) verstrichen ist, so dass der Strom durch das Submodul (20) durch den dritten leistungselektronischen Schalter (40) fließt, wird das Steuersignal an den dritten leistungselektronischen Schalter (40) blockiert.

2. Das Submodul (20) nach Anspruch 1, wobei der dritte elektronische Leistungsschalter (40) ein Thyristor ist.

3. Das Submodul (20) nach Anspruch 1 oder 2, wobei eine Diode (45) vorgesehen ist, die elektrisch in Reihe mit dem zweiten elektronischen Leistungsschalter (38) geschaltet ist, so dass die in Reihe dazu geschaltete Diode (45) antiparallel zum dritten elektronischen Leistungsschalter (40) geschaltet ist, und wobei der zweite elektronische Leistungsschalter (38) so konfiguriert ist, dass er nur einer ersten Polarität, die der Stromflussrichtung entspricht, bis zu einem vorgeschriebenen Spannungswert standhält, nicht jedoch einer dazu entgegengesetzten Polarität.

4. Das Submodul (20) gemäß einem der Ansprüche 1 bis 3, wobei die Steueranordnung (50) im Leistungsumwandlungszustand dazu konfiguriert ist, das Steuersignal an den dritten elektronischen Leistungsschalter (40) anzulegen, wenn im überbrückten Zustand Strom in den ersten Anschluss (23) hinein und aus dem zweiten Anschluss (22) heraus fließt.

5. Das Submodul (20) gemäß einem der Ansprüche 1 bis 4, wobei die vorgeschriebene Zeit vom Senden des Steuersignals an den dritten elektronischen Leistungsschalter (40) bis zu dessen Blockierung etwa 1 Mikrosekunde bis etwa 1 Millisekunde beträgt.

## Revendications

1. Sous-module (20) pour un convertisseur modulaire de source de tension multiniveaux, comprenant :
deux bornes (22, 23) pour connecter électriquement le sous-module (20) à l'intérieur du convertisseur modulaire de source de tension multiniveaux et définir une tension de sous-module (VSM) ;
un dispositif accumulateur d'énergie (25) prévu pour fournir une valeur de tension sensiblement constante ; une première paire de composants électroniques conducteurs de courant unidirectionnels à couplage antiparallèle (27) connectés électriquement en série avec le dispositif accumulateur d'énergie (25) pour former une première de deux branches du sous-module (20), connectée électriquement entre les bornes (22, 23) et le long de laquelle le courant peut circuler entre les bornes (22, 23), de sorte que la tension du sous-module (VSM) est sensiblement égale à la valeur de tension sensiblement constante du dispositif accumulateur d'énergie (25) ;
la première paire de composants électroniques (27) comprenant un premier commutateur électronique de puissance (30) prévu pour conduire le courant lorsqu'un signal de commande lui est appliqué, ledit premier commutateur électronique de puissance (30) étant orienté de manière à conduire le courant dans une première direction (I₁) d'une première des bornes (23) vers une deuxième borne (22) ;
une deuxième paire de composants électroniques conducteurs de courant unidirectionnels à couplage antiparallèle (27) connectés électriquement entre les bornes (22, 23) en parallèle avec la première branche par rapport aux bornes (22, 23) de manière à former une deuxième des deux branches du sous-module (20) le long de laquelle le courant peut circuler entre les bornes (22, 23) de sorte que la tension du sous-module (VSM) est sensiblement nulle ;
la deuxième paire de composants électroniques (35) comprenant un deuxième commutateur électronique de puissance (38) prévu pour conduire le courant lorsqu'un signal de commande lui est appliqué, ledit deuxième commutateur électronique de puissance (38) étant orienté de manière à conduire le courant dans une deuxième direction (I₂) de la deuxième borne (22) vers la première borne (23), en opposition à la première direction (I₁) ;
un dispositif de commande (50) prévu pour envoyer les signaux de commande aux commutateurs électroniques de puissance (30, 38) afin d'activer le sous-module (20) dans un état de conversion de puissance ayant un état d'insertion où la première paire de composants électroniques (27) est activée pour conduire le courant de sorte que la tension du sous-module (VSM) est égale à la valeur de tension sensiblement constante du dispositif accumulateur d'énergie (25), et un état de contournement où la deuxième paire de composants électroniques (35) est activée pour conduire le courant de sorte que la tension du sous-module (VSM) est sensiblement nulle ;
où le sous-module (20) est **caractérisé en ce que** :
la deuxième paire de composants électroniques (35) comprend un troisième commutateur électronique de puissance prévu pour conduire le courant lorsqu'un signal de commande lui est appliqué et pour cesser de conduire le courant en l'absence dudit signal de commande une fois que le courant traversant le troisième commutateur électronique chute sensiblement à zéro après suppression du signal de commande, ledit troisième commutateur électronique de puissance étant orienté de manière à conduire le courant dans la première direction (I₁) de la première borne (23) vers la deuxième borne (22) et étant prévu pour supporter une tension jusqu'à une valeur de tension prescrite avec une première polarité correspondant à la direction de conduction de courant et avec une deuxième polarité opposée à celle-ci ; et **en ce qu'**afin de supprimer un courant de court-circuit dû à une anomalie de CC et dirigé dans la première direction (I₁), le dispositif de commande (50) est prévu pour détecter une direction du courant traversant le sous-module (20) et pour réagir à la détection d'anomalie de CC afin d'activer le sous-module (20) dans un état de suppression d'anomalie de CC dans lequel :
si le courant conduit par le sous-module (20) circule dans la deuxième direction (I₂) dans la deuxième borne (22) et hors de la première borne (23), le dispositif de commande est prévu pour bloquer presque simultanément les signaux de commande vers le premier, le deuxième et le troisième commutateurs électroniques de puissance (30, 38, 40) ;
si le courant conduit par le sous-module (20) circule dans la première direction (I₁) dans la première borne (23) et hors de la deuxième borne (22) et que le sous-module (20) était activé en état de contournement avant détection de l'anomalie de CC, le dispositif de commande est prévu pour bloquer presque simultanément les signaux de commande vers le premier, le deuxième et le troisième commutateurs électroniques de puissance (30, 38) ; et
si le courant conduit par le sous-module (20) circule dans la première borne (23) et hors de la deuxième borne (22) et que le sous-module (20) était activé en état d'insertion avant détection de l'anomalie de CC, (i) le dispositif de commande est prévu pour bloquer presque simultanément les signaux de commande vers le premier et le deuxième commutateurs électroniques de puissance (30, 38, 40) et, presque simultanément, appliquer le signal de commande au troisième commutateur électronique de puissance (40) de sorte que le courant conduit par le premier commutateur électronique de puissance (30) avant détection de l'anomalie de CC peut être transféré au troisième commutateur électronique de puissance (40) afin de continuer à circuler à travers le sous-module (20) sans interruption ; et ii) après écoulement d'un temps prescrit après l'envoi du signal de commande au troisième commutateur électronique de puissance (40) de sorte que le courant traversant le sous-module (20) circule à travers le troisième commutateur électronique de puissance (40), le dispositif de commande est prévu pour bloquer le signal de commande vers le troisième commutateur électronique de puissance (40).

2. Sous-module (20) selon la revendication 1, où le troisième commutateur électronique de puissance (40) est un thyristor.

3. Sous-module (20) selon la revendication 1 ou la revendication 2, où est prévue une diode (45) connectée électriquement en série avec le deuxième commutateur électronique de puissance (38) de sorte que ladite diode (45) connectée en série avec celui-ci est couplée de manière antiparallèle au troisième commutateur électronique de puissance (40), et où le deuxième commutateur électronique de puissance (38) est prévu pour résister jusqu'à une valeur de tension prescrite uniquement avec une première polarité correspondant à la direction de conduction du courant, mais pas avec une polarité opposée à celle-ci.

4. Sous-module (20) selon l'une des revendications 1 à 3 où, en état de conversion de puissance, le dispositif de commande (50) est prévu pour appliquer le signal de commande au troisième commutateur électronique de puissance (40) lorsque le courant circule dans la première borne (23) et hors de la deuxième borne (22) en état de contournement.

5. Sous-module (20) selon l'une des revendications 1 à 4, où le temps prescrit entre l'envoi du signal de commande au troisième commutateur électronique de puissance (40) et le blocage de celui-ci est d'environ 1 microseconde à environ 1 milliseconde.
